# EUROPEAN PATENT APPLICATION

(11) **EP 4 654 315 A1**
(43) Date of publication of application: **26.11.2025**
(21) Application number: 24744668.5
(22) Date of filing: 17.01.2024
(51) Int. Cl.: H01M 10/0565, H01M 10/0567, H01M 10/0568

(54) **ELECTROLYTIC SOLUTION CONTAINING POLYCARBONATE RESIN AND ELECTROLYTE OBTAINED THEREFROM**

(30) Priority: 20.01.2023 JP 2023007186; 26.07.2023 JP 2023121337
(71) Applicant: MITSUBISHI GAS CHEMICAL COMPANY, INC., Chiyoda-ku Tokyo 100-8324 (JP)
(72) Inventor: OGAWA, Noriyoshi, Kamisu-shi, Ibaraki 314-0102 (JP); GOTO, Toshihito, Kamisu-shi, Ibaraki 314-0102 (JP); HORIUCHI, Shoki, Kamisu-shi, Ibaraki 314-0102 (JP)
(74) Representative: Hoffmann Eitle
(86) International application number: PCT/JP2024/001056
(87) International publication number: WO 2024/154747

(57) **Abstract**

According to the present invention, it is possible to provide an electrolytic solution containing a polycarbonate resin, wherein: the polycarbonate resin comprises a structural unit (A) derived from a monomer represented by general formula (1) below, and an end structure of the polycarbonate resin comprises an alkenyl group; and
the electrolytic solution contains a lithium salt, a radical initiator, and a crosslinking agent. 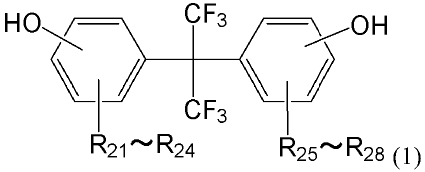 (In general formula (1), R₂₁-R₂₄ and R₂₅-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group).

## Description

### TECHNICAL FIELD

The present invention relates to an electrolytic solution containing a polycarbonate resin and an electrolyte obtained therefrom.

### BACKGROUND ART

Certain polycarbonate resins dissolved in organic solvents are known for their use as inks, paints, etc., and various organic solvents are used for this purpose. In recent years, there has been a shift from halogen-based organic solvents, toluene, 1,4-dioxane, and other solvents, which have safety concerns for humans, to safer solvents (see Patent literature 1).

On the other hand, carbonate-based organic solvents such as dimethyl carbonate and ethylene carbonate are relatively safe, and their use is expanding, especially as solvents for electrolytic solutions for lithium-ion batteries. However, there was room for improvement for use as a polycarbonate electrolytic solution because polycarbonate resins have low solubility in carbonate-based organic solvents, making it difficult to obtain a coating film. Various studies have been conducted to solve this problem. For example, it has been proposed to add methylene chloride as a solvent to give a colloidal solution for coating (Patent Literature 2). However, since methylene chloride is a halogen-based solvent that has a high environmental impact, there were concerns about its safety for humans.

### CITATION LIST

### Patent Literature

Patent literature 1: International Publication WO2018/123282
Patent literature 2: Japanese Unexamined Patent Application Publication No. 2000-357533

### SUMMARY OF INVENTION

### Technical Problem

The present invention aims to provide an electrolytic solution containing a polycarbonate resin that is easily dissolved in carbonate-based organic solvents and glyme-based solvents and showing good ionic conductivity, and an electrolyte obtained therefrom.

### Solution to Problem

As a result of diligent study to solve the above problem, the present inventors have found that a polycarbonate resin having a specific structural unit and end structure has excellent solubility in carbonate-based organic solvents and glyme-based solvents, forms solvation with a lithium salt, shows good ionic conductivity, and reacts with a crosslinking agent to form an elastic gel containing the lithium salt and the solvent, thereby accomplishing the present invention.

Thus, the present invention is as follows.
<1> An electrolytic solution containing a polycarbonate resin, wherein:
   the polycarbonate resin comprises a structural unit (A) derived from a monomer represented by general formula (1) below, and an end structure of the polycarbonate resin comprises an alkenyl group; and
   the electrolytic solution contains a lithium salt, a radical initiator, and a crosslinking agent: 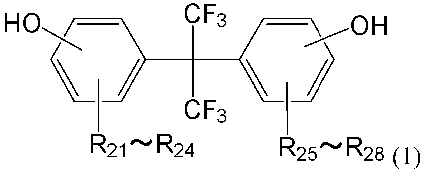 (in general formula (1),
      R₂₁-R₂₄ and R₂₅-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group).
<2> The electrolytic solution according to <1> above, wherein the electrolytic solution contains the polycarbonate resin in an amount of 0.1-30 mass%.
<3> The electrolytic solution according to <1> or <2> above, wherein the electrolytic solution contains the lithium salt in an amount of 0.1-30 mass%.
<4> The electrolytic solution according to any one of <1>-<3> above, wherein the end structure is an end structure derived from at least one selected from the group consisting of 2-[2-hydroxy-5-[2-(methacryloyloxy)ethyl]phenyl]-2H-benzotriazole, 4-hydroxyphenyl methacrylate, 4-isopropenylphenol, and o-allylphenol, represented by the structural formulae below: 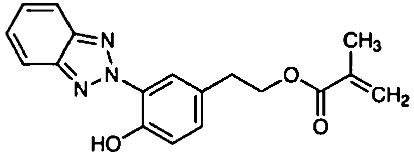
   2-[2-hydroxy-5-[2-(methacryloyloxy)ethyl]phenyl]-2H-benzotriazole 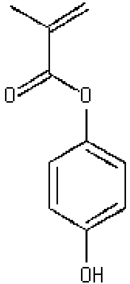
   4-hydroxyphenyl methacrylate 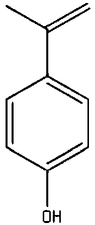
   4-isopropenylphenol 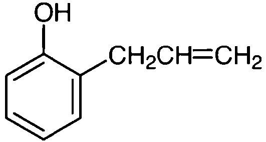
   o-allylphenol.
<5> The electrolytic solution according to any one of <1>-<4> above, wherein the lithium salt comprises at least one of LiPF₆ and Li(CF₃SO₂)₂N.
<6> The electrolytic solution according to any one of <1>-<5> above, wherein the radical initiator comprises at least one selected from the group consisting of 2-hydroxy-2-methylpropiophenone, 2-benzyl-2-(dimethylamino)-4'-morpholinobutyrophenone, 2,4,6-trimethylbenzoyl diphenylphosphine oxide, and bis(2,4,6-trimethylbenzoyl)phenylphosphine oxide, represented by the structural formulae below: 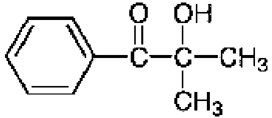
   2-hydroxy-2-methylpropiophenone 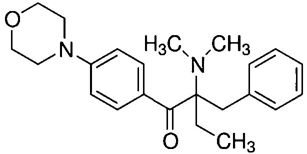
   2-benzyl-2-(dimethylamino)-4'-morpholinobutyrophenone 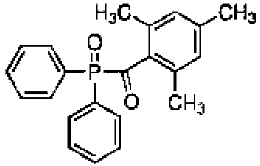
   2,4,6-trimethylbenzoyl diphenylphosphine oxide 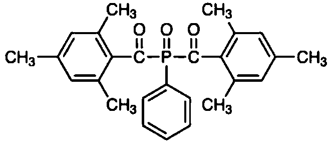
   bis(2,4,6-trimethylbenzoyl)phenylphosphine oxide.
<7> The electrolytic solution according to any one of <1>-<6> above, wherein the crosslinking agent is at least one selected from the group consisting of pentaerythritol tetraacrylate, dipentaerythritol hexaacrylate, trimethylolpropane triacrylate, and ditrimethylolpropane tetraacrylate, represented by the structural formulae below: 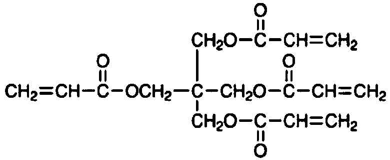
   pentaerythritol tetraacrylate 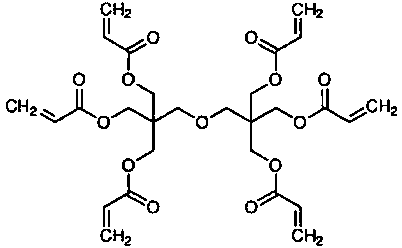
   dipentaerythritol hexaacrylate 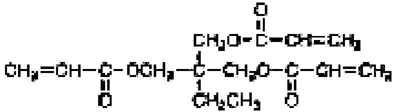
   trimethylolpropane triacrylate 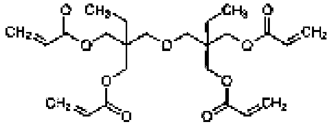
   ditrimethylolpropane tetraacrylate.
<8> The electrolytic solution according to any one of <1>-<7> above, wherein the weight-average molecular weight (Mw) of the polycarbonate resin is 10,000-200,000 in terms of polystyrene equivalent.
<9> The electrolytic solution according to any one of <1>-<8> above, containing a carbonate-based organic solvent or a glyme-based solvent as the solvent of the electrolytic solution.
<10> An electrolyte obtained by gelling the electrolytic solution according to any one of <1>-<9> above.
<11> The electrolyte according to <10> above, wherein the conductivity of the electrolyte is 0.2-10.0 mS/cm.

### ADVANTAGEOUS EFFECTS OF INVENTION

The present invention can provide an electrolytic solution containing a polycarbonate resin that is easily dissolved in carbonate-based organic solvents and glyme-based solvents and showing good ionic conductivity, and an electrolyte obtained therefrom. Furthermore, the electrolytic solution and electrolyte of the present invention are useful as electrolyte materials for Li polymer batteries and semi-solid-state batteries, and in particular can reduce the risk of leakage.

### DESCRIPTION OF EMBODIMENTS

Hereinafter, the present invention will be described in detail by illustrating embodiments, examples, and the like, but the present invention is not limited to the embodiments, examples, or the like illustrated below and may be modified as desired without departing from the gist of the present invention.

### [Electrolytic solution]

An electrolytic solution of the present invention contains a polycarbonate resin with a specific structure, a lithium salt, a radical initiator, and a crosslinking agent. A polycarbonate resin having a structural unit (A) and an alkenyl group at the end is thought to have good affinity with and dissolve well good in carbonate-based organic solvents and glyme-based solvents, form solvation with the lithium salt, show good ionic conductivity, and react with the crosslinking agent to form an elastic gel containing the lithium salt and the solvent.

### <Polycarbonate resin>

The polycarbonate resin used in the present invention comprises a structural unit (A) derived from a monomer represented by general formula (1) below, and an end structure of the polycarbonate resin comprises an alkenyl group. As described above, a polycarbonate resin having such a structure has good affinity with and dissolves well in carbonate-based organic solvents and glyme-based solvents. 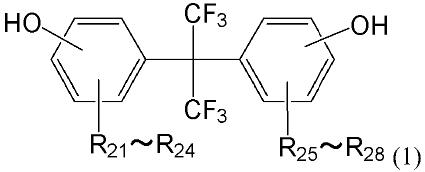 (In general formula (1),
R₂₁-R₂₄ and R₂₅-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, preferably hydrogen, a methyl group, or an allyl group, and more preferably hydrogen).

Herein, examples of the "substituent" intended in the phrase "optionally substituted" include "a fluorine atom, a chlorine atom, a bromine atom, an iodine atom, a C1-C7 alkyl group, a C6-C12 aryl group, a C2-C7 alkenyl group, a C1-C5 alkoxy group, a C7-C17 aralkyl group" and the like.

In the polycarbonate resin used in the present invention, the proportion of the structural unit (A) is preferably 80-100 mol%, more preferably 90-100 mol%, and particularly preferably 100 mol% relative to all structural units constituting the polycarbonate resin.

The polycarbonate resin of the present invention may contain a structural unit other than the structural unit (A) as long as the effect of the present invention is not impaired.

In one embodiment of the present invention, the monomer represented by general formula (1) above is preferably 2,2-bis(4-hydroxyphenyl)hexafluoropropane (BPAF), 2,2-bis(4-hydroxy-3-methylphenyl)hexafluoropropane, or 2,2-bis(4-hydroxy-3-al-lylphenyl)hexafluoropropane, and more preferably 2,2-bis(4-hydroxyphenyl)hexafluoropropane (BPAF) represented by the following structural formula.

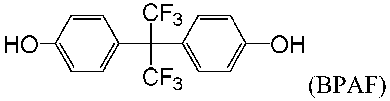

While the polycarbonate resin used in the present invention is one whose end structure contains an alkenyl group, there is no particular limitation as long as it contains an alkenyl group.

Among them, the end structure is preferably an end structure derived from at least one selected from the group consisting of 2-[2-hydroxy-5-[2-(methacryloyloxy)ethyl]phenyl]-2H-benzotriazole (abbreviated as RUV), 4-hydroxyphenyl methacrylate, 4-isopropenylphenol, and o-allylphenol (abbreviated as OAP), represented by the structural formulae below. 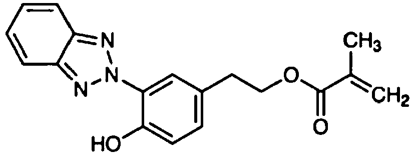
2-[2-Hydroxy-5-[2-(methacryloyloxy)ethyl]phenyl]-2H-benzotriazole (abbreviated as RUV) 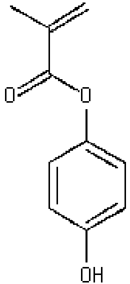
4-Hydroxyphenyl methacrylate 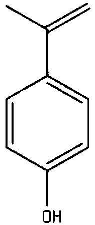
4-Isopropenylphenol 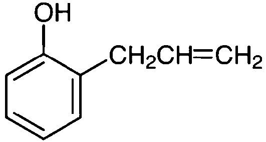
o-Allylphenol (abbreviated as OAP)

In a preferred embodiment of the present invention, a compound such as 2-[2-hydroxy-5-[2-(methacryloyloxy)ethyl]phenyl]-2H-benzotriazole (abbreviated as RUV), 4-hydroxyphenyl methacrylate, 4-isopropenylphenol, or o-allylphenol (abbreviated as OAP) can be used as a molecular weight regulator when preparing a polycarbonate resin, to add an alkenyl group to the end structure.

The polycarbonate resin used in the present invention can be produced by reacting a monomer represented by the above general formula (1) with a carbonate ester-forming compound. Accordingly, it can be produced by employing a known method used to produce a polycarbonate resin derived from bisphenol A, for example, the direct reaction of a bisphenol with phosgene (phosgene method) or the transesterification reaction of a bisphenol with a bisaryl carbonate (transesterification method).

According to the phosgene method, generally, a monomer represented by the above general formula (1) is reacted with phosgene in the presence of an acid-binding agent and a solvent. For example, pyridine, an alkali metal hydroxide such as sodium hydroxide or potassium hydroxide, or the like may be used as the acid-binding agent, while methylene chloride, chloroform, or the like may be used as the solvent. In addition, in order to accelerate the condensation polymerization reaction, it is preferable to add a catalyst, for example, a tertiary amine such as triethylamine or a quaternary ammonium salt such as benzyltriethylammonium chloride. It is also desirable to add a compound such as 2-[2-hydroxy-5-[2-(methacryloyloxy)ethyl]phenyl]-2H-benzotriazole (abbreviated as RUV) mentioned above as a molecular weight regulator. If desired, an antioxidant such as sodium sulfite or hydrosulfite, and a branching agent such as phloroglucin or isatin bisphenol may also be added in small amounts. A suitable reaction temperature is usually in the range of 0-150°C, preferably 5-40°C. While the reaction time depends on the reaction temperature, it is usually 0.5 minutes to 10 hours, preferably 1 minute to 2 hours. The pH of the reaction system is desirably kept at 10 or higher during the reaction.

On the other hand, according to the transesterification method, a monomer represented by the above general formula (1) is mixed with a bisaryl carbonate and reacted at high temperature under reduced pressure. Examples of the bisaryl carbonate include bisallyl carbonates such as diphenyl carbonate, di-p-tolyl carbonate, phenyl-p-tolyl carbonate, di-p-chlorophenyl carbonate, and dinaphthyl carbonate. It is also possible to use two or more types of these compounds in combination. The reaction is usually carried out at a temperature in the range of 150-350°C, preferably 200-300°C, and the final degree of pressure reduction is preferably 1 mmHg or lower to distill the phenol derived from the bisaryl carbonate generated by the transesterification reaction away from the system. While the reaction time depends on the reaction temperature and the degree of pressure reduction, it is usually about 1-24 hours. The reaction is preferably performed under an inert gas atmosphere such as nitrogen or argon. In addition, if desired, a molecular weight regulator, an antioxidant, and a branching agent can be added to carry out the reaction.

The weight-average molecular weight (Mw) of the polycarbonate resin used in the present invention in terms of polystyrene equivalent is preferably 10,000-200,000, more preferably 15,000-200,000, still more preferably 19,000-200,000, yet still more preferably 20,000-200,000, and particularly preferably 20,000-100,000. The weight-average molecular weight (Mw) can be determined by the method described in the examples below.

According to the present invention, the content of the polycarbonate resin in the electrolytic solution is preferably 0.1-30 mass%, more preferably 0.3-30 mass%, still more preferably 0.3-25 mass%, and particularly preferably 0.5-20% mass%.

### <Carbonate-based organic solvents, glyme-based solvents>

The polycarbonate resin used in the present invention is highly soluble in carbonate-based organic solvents and glyme-based solvents, and these carbonate-based organic solvents and glyme-based solvents serve as a solvent for the electrolytic solution of the present invention. Specific examples of the carbonate-based organic solvent used in the present invention include linear carbonates such as dimethyl carbonate (hereinafter abbreviated as "DMC"), diethyl carbonate (hereinafter abbreviated as "DEC"), and methyl ethyl carbonate (hereinafter abbreviated as "MEC"), and cyclic carbonates such as ethylene carbonate (hereinafter abbreviated as "EC"), propylene carbonate (hereinafter abbreviated as "PPC"), vinylene carbonate, and fluoroethylene carbonate. In the present invention, two or more of them can also be used in combination. Among them, DMC, DEC, MEC, and PPC are preferred because polycarbonate resins are relatively highly soluble in them.

On the other hand, specific examples of the glyme-based solvent used in the present invention preferably include tetraglyme and triglyme.

In the present invention, an ether-based organic solvent such as tetraglyme, triglyme, dimethoxyethane, tetrahydrofuran, 1,3-dioxolane, or 1,4-dioxane, or an organic solvent such as sulfolane, dimethyl sulfoxide, or γ-butyrolactone can be used in combination with a carbonate-based organic solvent. It is also possible to use one of these solvents alone, or two or more of these solvents in combination.

According to the present invention, the content of the carbonate-based organic solvent or glyme-based solvent in the electrolytic solution is preferably 10-99.95 mass%, more preferably 50-99.95 mass%, still more preferably 70-99 mass%, yet still more preferably 75-99 mass%, and particularly preferably 80-99 mass%.

According to the present invention, it is preferable to use a solvent consisting only of a combination of a carbonate-based organic solvent and a glyme-based solvent, but organic solvents that are not toxic substances specified in the Poisonous and Deleterious Substances Control Law of Japan or specific chemical substances as defined in the Industrial Safety and Health Act may be added as long as they do not impair the effects of the present invention. Specifically, the content of an organic solvent other than the carbonate-based organic solvent or glyme-based solvent in the electrolytic solution of the present invention can be about 0-30 mass%.

### <Lithium salt>

The electrolytic solution of the present invention preferably contains 0.1-30 mass% of Li salt, more preferably 1.0-25 mass% or 1.0-20 mass%, and particularly preferably 5-25 mass% or 5-20 mass%.

Li salts are soluble in carbonate-based organic solvents and glyme-based solvents, and specific examples thereof include LiPF₆, C₂F₆LiNO₄, LiClO₄, LiBF₄, LiCoO₂, LiBOB, LiBH₄, Li(FSO₂)₂N, and Li(CF₃SO₂)₂N. Among others, the Li salt preferably comprises at least one of LiPF₆ and Li(CF₃SO₂)₂N. Small amounts of stabilizer, overcharge preventing agent, flame retardant, etc. may also be added to stabilize the electrode surface.

### <Radical initiator>

The electrolytic solution of the present invention preferably contains 0.01-10 mass% of radical initiator, more preferably 0.1-5 mass%, and particularly preferably 0.2-3 mass%.

In a preferred embodiment of the present invention, at least one selected from the group consisting of 2-hydroxy-2-methylpropiophenone, 2-benzyl-2-(dimethylamino)-4'-morpholinobutyrophenone, 2,4,6-trimethylbenzoyl diphenylphosphine oxide, and bis(2,4,6-trimethylbenzoyl)phenylphosphine oxide, represented by the structural formulae below, is preferably contained as the radical initiator. 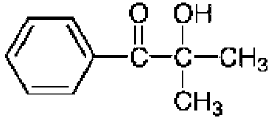
2-Hydroxy-2-methylpropiophenone 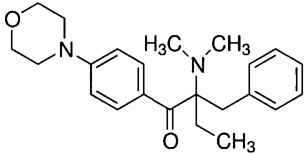
2-Benzyl-2-(dimethylamino)-4'-morpholinobutyrophenone 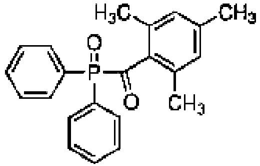
2,4,6-Trimethylbenzoyl diphenylphosphine oxide (also known as diphenyl(2,4,6-trimethylbenzoyl)phosphine oxide) 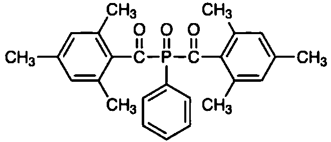
Bis(2,4,6-trimethylbenzoyl)phenylphosphine oxide (also known as phenylbis(2,4,6-trimethylbenzoyl)phosphine oxide)

### <Crosslinking agent>

The electrolytic solution of the present invention preferably contains 0.1-20 mass% of crosslinking agent, more preferably 0.2-10 mass%, and particularly preferably 0.5-5 mass%.

In a preferred embodiment of the present invention, a preferred chemical structure of the crosslinking agent is to have two or more unsaturated reactive groups in a molecule. Examples of the unsaturated reactive group include a vinyl group, an allyl group, and a vinylidene group, preferably a vinyl group.

In a preferred embodiment of the present invention, at least one selected from the group consisting of pentaerythritol tetraacrylate, dipentaerythritol hexaacrylate, trimethylolpropane triacrylate, and ditrimethylolpropane tetraacrylate, represented by the structural formulae below, is preferably contained as the crosslinking agent. 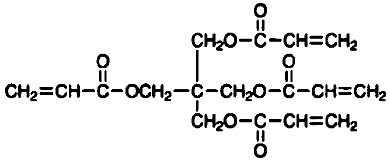
Pentaerythritol tetraacrylate 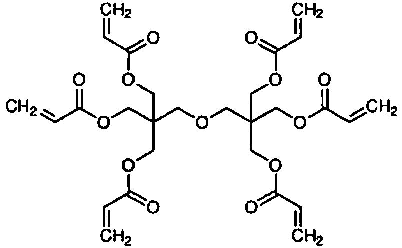
Dipentaerythritol hexaacrylate 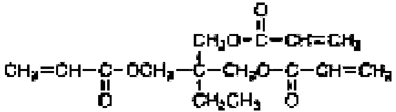
Trimethylolpropane triacrylate 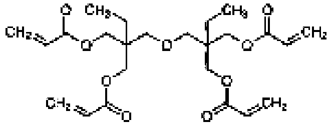
Ditrimethylolpropane tetraacrylate

### <Optional additives>

If necessary, an anti-rust agent, an antioxidant, a dispersant, an UV absorber, a defoaming agent, a leveling agent, etc. may further be added to the electrolytic solution of the present invention.

### [Electrolyte]

The electrolytic solution of the present invention can be concentrated and partially gelled to obtain a gel polymer electrolyte. While the method of concentrating the electrolytic solution is not particularly limited, such a method may be, for example, removing some of the solvent by air-drying to give a high-viscosity liquid with a solidified surface.

An electrolyte can also be obtained by irradiating the electrolytic solution of the present invention with, for example, UV light at 365 nm under conditions of 50 mW/cm for about 30 minutes to cause it to gel.

The electrolyte of the present invention preferably has a conductivity of 0.2-10.0 mS/cm, 0.2-5.0 mS/cm, 0.2-3.0 mS/cm, 0.3-5.0 mS/cm, 0.3-3.0 mS/cm, 0.4-3.0 mS/cm, or 0.4-2.0 mS/cm at 20°C. The method described in the examples below can be used to measure the conductivity.

The electrolyte of the present invention is useful as an electrolyte material for Li polymer batteries and semi-solid-state batteries, and in particular can reduce the risk of leakage.

### EXAMPLES

Hereinafter, examples of the present invention will be described along with comparative examples to illustrate the invention in detail, but the present invention is not limited to these examples.

### 1) Conductivity of electrolyte

The following conductivity meter was used for the measurement.
- Equipment used: Waterproof conductivity meter AS650 (manufactured by AS ONE CORPORATION)

### 2) Appearance of electrolyte (gelled state, solid appearance)

The electrolytic solution was gelled by irradiating it with UV light at a wavelength of 365 nm and an irradiance of 50 mW/cm² (HLDL-100365-NWPSC manufactured by CCS Inc.) for 30 minutes, and the gelled state was observed by touching and visual inspection. Specifically, the state of the gel was evaluated based on the following four evaluation criteria.
A: Hard gel
B: Soft gel
C: Brittle, crumbling gel
D: Liquid

### 3) Weight-average molecular weight (Mw) and number-average molecular weight (Mn)

The weight-average molecular weight (Mw) and number-average molecular weight (Mn) of the polycarbonate resin were measured by gel permeation chromatography (GPC) and calculated in terms of standard polystyrene. The equipment, columns, and measurement conditions used were as follows.
- Equipment used: Alliance HPLC System manufactured by Waters Corporation ·Columns: Two Shodex 805L columns manufactured by Showa Denko K.K.
- Sample solution: 0.25 w/v% chloroform solution
   ·Eluent: Chloroform
- Flow rate of eluent: 1 ml/min
- Detector: UV detector (detection wavelength: 254 nm)

### (Synthesis example 1)

100 g (0.298 mol) of 2,2-bis(4-hydroxyphenyl)hexafluoropropane (hereinafter abbreviated as "BPAF": manufactured by Central Glass Co., Ltd.) and 0.5 g of hydrosulfite were dissolved in 700 ml of a 6.6% m/m aqueous sodium hydroxide solution.

To this was added 300 ml of methylene chloride and, while stirring and keeping the temperature at 12-20°C, 55 g of phosgene was then blown in for about 40 minutes.

After phosgene blowing, a solution of 3.21 g of 2-[2-hydroxy-5-[2-(methacryloyloxy)ethyl]phenyl]-2H-benzotriazole (hereinafter abbreviated as "RUV": manufactured by Otsuka Chemical Co. Ltd.) dissolved in 100 ml of methylene chloride as a molecular weight regulator and 100 ml of a 9% m/m aqueous sodium hydroxide were added while stirring thoroughly to emulsify the reaction solution. After emulsification, 0.5 ml of triethylamine was added and the mixture was stirred at 19-28°C for about 40 minutes to polymerize.

After polymerization, the reaction solution was separated into an aqueous phase and an organic phase, the organic phase was neutralized with phosphoric acid, and repeatedly rinsed with water until the conductivity of the wash liquid (aqueous phase) became 10 µS/cm or less. The resulting polymer solution was heated to 100°C on an aluminum tray and the solvent was removed until the solution was no longer flowable to obtain a platelike solid. The resulting solid was further dried at 120°C for 18 hours to obtain a dried polymer solid.

The weight-average molecular weight (hereinafter abbreviated as "Mw") and number-average molecular weight (hereinafter abbreviated as "Mn") of this polymer as measured by GPC were 52,480 and 13,660, respectively. As a result of analyzing the obtained polymer by infrared absorption spectroscopy, absorption due to a carbonyl group at around 1,770 cm⁻¹ and absorption due to an ether bond at around 1,240 cm⁻¹ were observed, confirming that it was a polycarbonate resin with a carbonate bond (hereinafter abbreviated as "PC-1").

### (Synthesis example 2)

Polymerization was carried out in the same manner as in Synthesis example 1 except that the amount of BPAF was changed to 84 g, 16 g of 2,2-bis(4-hydroxy-3-methylphenyl)propane (hereinafter abbreviated as "BPC": manufactured by Honshu Chemical Industry Co., Ltd.) was used, and the amount of RUV was changed to 3.37 g, thereby obtaining a polycarbonate resin (hereinafter abbreviated as "PC-2"). The Mw and Mn of PC-2 were 50,380 and 9,520, respectively.

### (Synthesis example 3)

Polymerization was carried out in the same manner as Synthesis example 1 except that the amount of BPAF was changed to 87.0 g, 13.0 g of a mixture of 4,4'-methylenediphenol, 2,2'-methylenediphenol, and 2,4'-methylenediphenol (hereinafter abbreviated as "BPF": manufactured by Gun Ei Chemical Industry Co., Ltd.) was used, and the amount of RUV was changed to 3.49 g, thereby obtaining a polycarbonate resin (hereinafter abbreviated as "PC-3"). The Mw and Mn of PC-3 were 49,900 and 9,410, respectively.

### (Synthesis example 4)

Polymerization was carried out in the same manner as in Synthesis example 1 except that the amount of RUV was changed to 1.60 g, thereby obtaining a polycarbonate resin (hereinafter abbreviated as "PC-4"). The Mw and Mn of PC-4 were 88,860 and 11,280, respectively.

### (Synthesis example 5)

Polymerization was carried out in the same manner as in Synthesis example 1 except that the amount of RUV was changed to 10.58 g, thereby obtaining a polycarbonate resin (hereinafter abbreviated as "PC-5"). The Mw and Mn of PC-5 were 19,420 and 5,620, respectively.

### (Synthesis example 6)

Polymerization was carried out in the same manner as in Synthesis example 1 except that RUV was changed to 1.49 g of p-tertiary butylphenol (hereinafter abbreviated as "PTBP"), thereby obtaining a polycarbonate resin (hereinafter abbreviated as "PC-6"). The Mw and Mn of PC-6 were 54,740 and 17,590, respectively.

**[Table 1]**

| Abbreviated name | Content/Name | Main backbone | End | Mw/Mn |
|---|---|---|---|---|
| PC-1 | Synthesis example 1: Methacrylic end-type BPAF homopolycarbonate | BPAF | RUV | 52,480/13,660 |
| PC-2 | Synthesis example 2: Methacrylic end-type BPAF/BPC copolymerized polycarbonate | BPAF/BPC | RUV | 50,380/9,520 |
| PC-3 | Synthesis example 3: Methacrylic end-type BPAF/BPF copolymerized polycarbonate | BPAF/BPF | RUV | 49,900/17,220 |
| PC-4 | Synthesis example 4: Methacrylic end-type BPAF homopolycarbonate | BPAF | RUV | 88,860/11,280 |
| PC-5 | Synthesis example 5: Methacrylic end-type BPAF homopolycarbonate oligomer | BPAF | RUV | 19,420/5,620 |
| PC-6 | Synthesis example 6: PTBP end-type BPAF homopolycarbonate | BPAF | PTBP | 54,740/17,590 |

### (Example 1)

0.01 g of PC-1 shown in Table 1 above as a polycarbonate resin, 0.02 g of pentaerythritol tetraacrylate (hereinafter abbreviated as "C1") as a crosslinking agent, and 1.95 g of LiPF₆/diethyl carbonate (DEC) solution (1 mol/L solution) (hereinafter abbreviated as "L1") as a lithium salt-containing solution were placed in a glass bottle with an inner diameter of 20 mm, sealed, and mixed homogeneously in a shaker. Then, 0.02 g of 2-hydroxy-2-methylpropiophenone (hereinafter abbreviated as "R1") was added as a radical initiator and mixed in the shaker to obtain an electrolytic solution. Subsequently, the electrolytic solution was irradiated with UV light at 365 nm under conditions of 50 mW/cm for 30 minutes to cause it to gel, thereby obtaining an electrolyte. The physical properties of the resulting electrolyte are shown in Table 2.

### (Examples 2-17, Comparative examples 1-6)

Electrolytic solutions and electrolytes were obtained in the same manner as in Example 1, except that they were produced by using the polycarbonate resin, crosslinking agent, lithium salt, and radical initiator shown in Table 2 in the proportions shown in Table 2. The physical properties of the resulting electrolytes are shown in Table 2.

**[Table 2]**

| | Composition of electrolytic solution | | | | | | | | | Physical properties | |
|---|---|---|---|---|---|---|---|---|---|---|---|
| | Resin type | Proportion of resin | Type of lithium saltcontaining solvent | Proportion of lithium saltcontaining solution in electrolytic solution | Proportion of lithium salt in electrolytic solution | Type of crosslinking agent | Proportion of crosslinking agent | Type of radical initiator | Proportion of radical initiator | Conductivity of electrolyte | Appearance of electrolyte |
| | | (mass %) | | (mass %) | (mass %) | | (mass%) | | (mass%) | (mS/cm) | |
| Example 1 | PC-1 | 0.5 | L1 | 97.5 | 14.4 | C1 | 1.0 | R1 | 1.0 | 1.71 | B |
| Example 2 | PC-1 | 2.5 ; | L1 | 95.5 | 14.1 | C1 | 1.0 | R1 | 1.0 | 1.35 | B |
| Example 3 | PC-1 | 5.0 | L1 | 93.5 | 13.8 | C1 | 0.5 | R1 | 1.0 | 1.39 | B |
| Example 4 | PC-1 | 10.0 | L1 | 84.0 | 12.4 | C1 | 5.0 | R1 | 1.0 | 0.46 | A |
| Example 5 | PC-1 | 20.0 | L1 | 78.0 | 11.5 | C1 | 1.0 | R1 | 1.0 | 0.39 | A |
| Example 6 | PC-1 | 5.0 | L1 | 92.0 | 13.6 | C1 | 1.0 | R1 | 2.0 | 0.88 | B |
| Example 7 | PC-2 | 5.0 | L1 | 93.0 | 13.8 | C1 | 1.0 | R1 | 1.0 | 0.70 | B |
| Example 8 | PC-3 | 5.0 | L1 | 93.0 | 13.8 | C1 | 1.0 | R1 | 1.0 | 0.70 | A |
| Example 9 | PC-4 | 5.0 | L1 | 93.0 | 13.8 | C1 | 1.0 | R1 | 1.0 | 0.77 | B |
| Example 10 | PC-1 | 5.0 | L2 | 93.0 | 15.0 | C1 | 1.0 | R1 | 1.0 | 0.61 | B |
| Example 11 | PC-1 | 5.0 | L3 | 93.0 | 13.5 | C1 | 1.0 | R1 | 1.0 | 1.51 | A |
| Example 12 | PC-1 | 5.0 | L1 | 93.0 | 13.8 | C2 | 1.0 | R1 | 1.0 | 0.70 | B |
| Example 13 | PC-1 | 5.0 | L1 | 93.0 | 13.8 | C3 | 1.0 | R1 | 1.0 | 0.66 | A |
| Example 14 | PC-5 | 20.0 | L1 | 74.0 | 11.0 | C1 | 5.0 | R1 | 1.0 | 0.25 | B |
| Example 15 | PC-1 | 20.5 | L4 | 76.5 | 23.4 | C3 | 2.0 | R1 | 1.0 | 0.91 | A |
| Example 16 | PC-1 | 20.4 | L5 | 76.5 | 17.3 | C3 | 2.0 | R1 | 1.0 | 0.82 | A |
| Example 17 | PC-1 | 20.4 | L6 | 76.5 | 19.2 | C3 | 2.0 | R1 | 1.0 | 1.90 | A |
| Comparative example 1 | Not added | 0.0 | L1 | 100 | 14.8 | Not added | 0.0 | Not added | 0.0 | 1.56 | D |
| Comparative example 2 | Not added | 0.0 | L1 | 98.0 | 14.5 | C1 | 1.0 | R1 | 1.0 | 2.03 | D |
| Comparative | PC-1 | 5.0 | L1 | 94.0 | 13.9 | Not added | 0.0 | R1 | 1.0 | 2.05 | D |
| example 3 | | | | | | | | | | | |
| Comparative example 4 | PC-6 | 10.0 | L1 | 84.0 | 12.4 | C1 | 5.0 | R1 | 1.0 | 0.42 | C |
| Comparative example 5 | MMA | 5.0 | L1 | 94.0 | 13.9 | Not added | 0.0 | R1 | 1.0 | 1.29 | D |
| Comparative example 6 | MMA | 5.0 | L1 | 93.5 | 13.8 | C1 | 0.5 | R1 | 1.0 | 0.80 | D |

| | |
|---|---|
| MMA: | Methyl methacrylate |
| L1: | LiPF_{6/}DEC, 1 mol/L solution, 14.8% m/m |
| L2: | LiPF₆/Li(CF₃SO₂)₂N/DEC 0.9 mol/0.1 mol/DEC, 1 mol/L solution in total, 16.1% m/m |
| L3: | LiPF₆/DEC/propylene carbonate (PPC) 1 mol/L (9:1 = DEC/PPC volume ratio), 14.5% m/m |
| L4: | Li(CF₃SO₂)₂N/DEC/PPC, 1.23 mol/L solution in total (1:1 = DEC/PPC volume ratio), 30.6% m/m |
| L5: | Li(CF₃SO₂)₂N/tetraglyme (TEG), 0.84 mol/L solution in total, 22.7% m/m |
| L6: | Li(CF₃SO₂)₂N/tetraglyme (TEG)/propylene carbonate (PPC), 0.99 mol/L solution in total (TEG:PPC = 1:1 volume ratio), 24.6% m/m |
| C1: | Pentaerythritol tetraacrylate |
| C2: | Dipentaerythritol hexaacrylate |
| C3: | Trimethylolpropane triacrylate |
| R1: | 2-Hydroxy-2-methylpropiophenone (HMP) |

The results shown in Table 2 indicate that it is possible to obtain a gel-like solid electrolyte that retains its shape while keeping good conductivity by using a polycarbonate resin having an alkenyl group at the end and a crosslinking agent in combination. On the other hand, Comparative example 4, which used PC-6 without an alkenyl group at the end, resulted in a gel-like electrolyte with low conductivity and a brittle, crumbly texture.

The present invention can be applied to a material for Li polymer batteries and solid electrolytes with reduced risk of leakage and ignition.

## Claims

1. An electrolytic solution comprising a polycarbonate resin, wherein:
the polycarbonate resin comprises a structural unit (A) derived from a monomer represented by general formula (1) below, and an end structure of the polycarbonate resin comprises an alkenyl group; and
the electrolytic solution comprises a lithium salt, a radical initiator, and a crosslinking agent: 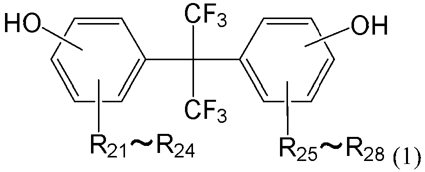 (in general formula (1),
R₂₁-R₂₄ and R₂₅-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group).

2. The electrolytic solution according to claim 1, wherein the electrolytic solution comprises the polycarbonate resin in an amount of 0.1-30 mass%.

3. The electrolytic solution according to claim 1 or 2, wherein the electrolytic solution comprises the lithium salt in an amount of 0.1-30 mass%.

4. The electrolytic solution according to any one of claims 1-3, wherein the end structure is an end structure derived from at least one selected from the group consisting of 2-[2-hydroxy-5-[2-(methacryloyloxy)ethyl]phenyl]-2H-benzotriazole, 4-hydroxyphenyl methacrylate, 4-isopropenylphenol, and o-allylphenol, represented by the structural formulae below: 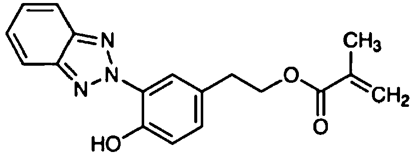
2-[2-hydroxy-5-[2-(methacryloyloxy)ethyl]phenyl]-2H-benzotriazole 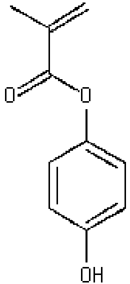
4-hydroxyphenyl methacrylate 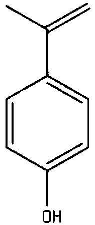
4-isopropenylphenol 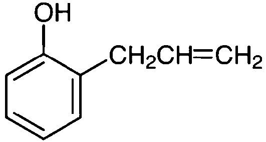
o-allylphenol.

5. The electrolytic solution according to any one of claims 1-4, wherein the lithium salt comprises at least one of LiPF₆ and Li(CF₃SO₂)₂N.

6. The electrolytic solution according to any one of claims 1-5, wherein the radical initiator comprises at least one selected from the group consisting of 2-hydroxy-2-methylpropiophenone, 2-benzyl-2-(dimethylamino)-4'-morpholinobutyrophenone, 2,4,6-trimethylbenzoyl diphenylphosphine oxide, and bis(2,4,6-trimethylbenzoyl)phenylphosphine oxide, represented by the structural formulae below: 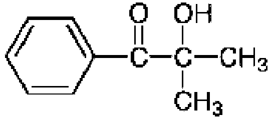
2-hydroxy-2-methylpropiophenone 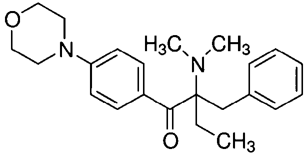
2-benzyl-2-(dimethylamino)-4'-morpholinobutyrophenone 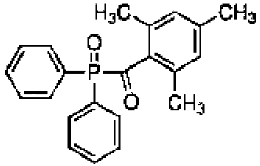
2,4,6-trimethylbenzoyl diphenylphosphine oxide 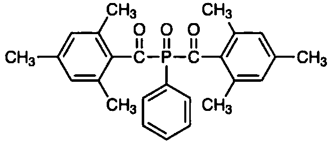
bis(2,4,6-trimethylbenzoyl)phenylphosphine oxide.

7. The electrolytic solution according to any one of claims 1-6, wherein the crosslinking agent is at least one selected from the group consisting of pentaerythritol tetraacrylate, dipentaerythritol hexaacrylate, trimethylolpropane triacrylate, and ditrimethylolpropane tetraacrylate, represented by the structural formulae below: 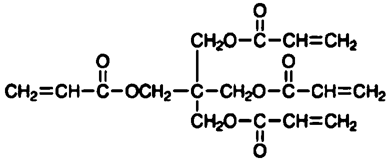
pentaerythritol tetraacrylate 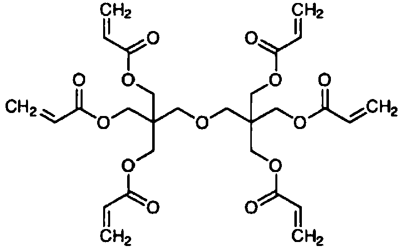
dipentaerythritol hexaacrylate 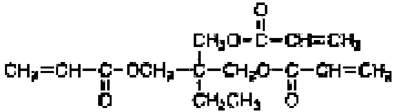
trimethylolpropane triacrylate 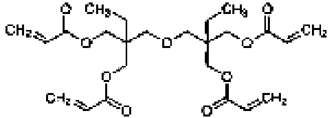
ditrimethylolpropane tetraacrylate.

8. The electrolytic solution according to any one of claims 1-7, wherein a weight-average molecular weight (Mw) of the polycarbonate resin is 10,000-200,000 in terms of polystyrene equivalent.

9. The electrolytic solution according to any one of claims 1-8, comprising a carbonate-based organic solvent or a glyme-based solvent as a solvent of the electrolytic solution.

10. An electrolyte obtained by gelling the electrolytic solution according to any one of claims 1-9.

11. The electrolyte according to claim 10, wherein a conductivity of the electrolyte is 0.2-10.0 mS/cm.
